# EUROPEAN PATENT APPLICATION

(11) **EP 0 656 717 A1**
(43) Date of publication of application: **07.06.1995**
(21) Application number: 94308642.1
(22) Date of filing: 23.11.1994
(51) Int. Cl.: H04M 3/54, G07C 9/00

(54) **Automatic location identification and call forwarding techniques**

(30) Priority: 02.12.1993 US 160313
(71) Applicant: AT&T Corp., New York, NY 10013-2412 (US)
(72) Inventor: Salimando, Steven C., Little Silver, New Jersey 07739 (US)
(74) Representative: Buckley, Christopher Simon Thirsk

(57) **Abstract**

Techniques are disclosed for automatically identifying the locations of telephone subscribers (e.g. normally on 190). The location of the telephone subscriber is determined so that incoming telephone calls for a given telephone subscriber may be directed to a telephone device (e.g. 152) situated near the current location of the subscriber. A portable tracking device (100,130) is employed to determine the subscriber location. The tracking device includes a memory (104) for storing a subscriber identification number uniquely specifying a telephone subscriber or a group of telephone subscribers, a transceiver (140) for transmitting and receiving radio signals, and a processor, (138), coupled to the memory and to the transceiver for selectively activating the transceiver in response to a received radio signal (from 150) to transmit a radio signal including the subscriber identification number.

## Description

### Technical Field

The present invention relates generally to personal communications systems and methods, and more particularly to techniques for connecting incoming telephone calls intended for a specific individual to a telephone device situated near the current location of that individual.

### Background of the Invention

In today's fast-paced world, it is often very difficult to reach people by telephone. In the workplace, employees may be called upon to perform a variety of duties, with the result that these individuals are seldom at their desks, sitting next to the phone. After working hours, people may spend a significant amount of time away from home, visiting friends and relatives, shopping, or dining out. Although it is possible to initiate a future contact with these individuals by leaving a message on an answering device or by activating a paging system, it would be much more desirable to speak directly to the person without having to wait for the person to answer a page or a voice message. Oftentimes, it can be an extremely frustrating experience to make repeated attempts at reaching someone, only to be connected with various electronic machines in the form of voice mailboxes and automated voice-response paging networks.

Various prior art techniques have been developed to address the shortcomings of traditional answering machines and pagers. For example, Shigenaga, U.S. Patent No. 4,852,456, sets forth a telephone system which uses a smart card to activate the telephone nearest to the smart card user, so that this telephone will ring upon receipt of an incoming call directed to the smart card user. A smart card stores a personal ID number, and the card must be inserted into a telephone interface near the smart card user in order to activate the call forwarding feature. In this manner, the personal ID number of the smart card user is registered and associated with this telephone. Once this ID number has been registered, the nearest telephone is automatically connected to any calling telephone on which the personal ID number is dialed.

Users of the Shigenaga apparatus must tolerate the inconvenience of having to insert a smart card into a holder before the call forwarding feature is activated. Additionally, the system will continue to forward calls to a given number until the user changes his or her telephone registration by inserting the smart card into another telephone interface. Users must take the time to report their current location to the system; otherwise, the call forwarding system will be rendered impractical. For example, if an individual forgets to re-register at a new location, that individual will miss all calls directed to him or her. Meanwhile, incoming calls will be directed to that individual's former location, where the calls may not be properly handled or documented.

It would be especially desirable to develop a location registration and call forwarding system for use in environments such as restaurants, hotels, and large office complexes. Such a registration system should be capable of tracking the locations of individuals automatically, without requiring these individuals to insert electronic devices into specially-equipped receptacles at fixed, predetermined locations. Oftentimes, individuals who are not at their office or home telephones may be staying at an out of town motel, entertaining a client at a restaurant, or attending a meeting in a large office complex. Unfortunately, existing prior art systems for location registration and call forwarding are especially ill-suited for use in these environments, because telephone subscribers must continually remember to update their location registrations. If a subscriber forgets to update his or her location, the consequences could be disastrous. For example, if the Shigenaga system was employed in the context of a restaurant, the restaurant proprietor could conceivably be inundated with calls for individuals who had long since left the restaurant, but had forgotten or failed to update their location registration. Similarly, the peace of hotel guests would be disturbed by telephone calls directed to former guests of the hotel. Worse yet, a system subscriber could be embarrassed if an incoming telephone call from an important client was misdirected to a nightclub the subscriber had visited the previous evening. Therefore, what is needed is a system which keeps track of the locations of system subscribers without requiring explicit location updates from the subscriber.

### Summary of the Invention

The invention is characterized by systems and methods for automatically identifying the present location of a telephone subscriber. Incoming telephone calls for this subscriber are then forwarded to a telephone device situated in physical proximity to the present location of the subscriber. A portable subscriber tracking device, such as a smart card, is employed to determine the present location of the telephone subscriber. The tracking device includes a memory for storing a subscriber identification number uniquely specifying a particular telephone subscriber or a particular group of telephone subscribers, a transceiver for transmitting and receiving radio signals, and a processor, coupled to the memory and to the transceiver, for selectively activating the transceiver, in response to a received radio signal, to transmit a radio signal, including the subscriber identification number.

One preferred embodiment utilizes the combination of a smart card and an radio frequency encasing to implement the subscriber tracking device. The tracking devices operate in conjunction with a calling telephone device, a called telephone device, and a third telephone device. Telephone devices are defined as any of the following: standard touch-tone telephones, fax machines, wireless telephones, telephone answering machines, telex devices, conventional rotary telephones, or the like. A telephone switching network is utilized, which includes a switch for connecting the calling telephone device to at least one of the called telephone device and the third telephone device, a processor which controls the operation of the switch, and a remotely-activated call forwarding device operative on an incoming telephone call directed to the called telephone device for forwarding the telephone call to the third telephone device. A portable telephone subscriber location unit utilizes a signal generator which produces a subscriber identification signal uniquely specifying a given telephone subscriber or group of subscribers. The called telephone device and the third telephone device each utilize a signal detector and generator responsive to the receipt of a subscriber identification signal for sending a forwarding signal to the remotely-activated call forwarding device. One example of a portable telephone subscriber location unit is the combination of a smart card and a radio frequency encasing which at least partially encloses the smart card.

### Brief Description of the Drawings

FIG. 1 is a hardware block diagram setting forth a preferred embodiment of the invention; and
FIG. 2 is a flowchart setting forth the sequence of operations perform by a preferred embodiment of the present invention.

### Detailed Description of the Preferred Embodiments

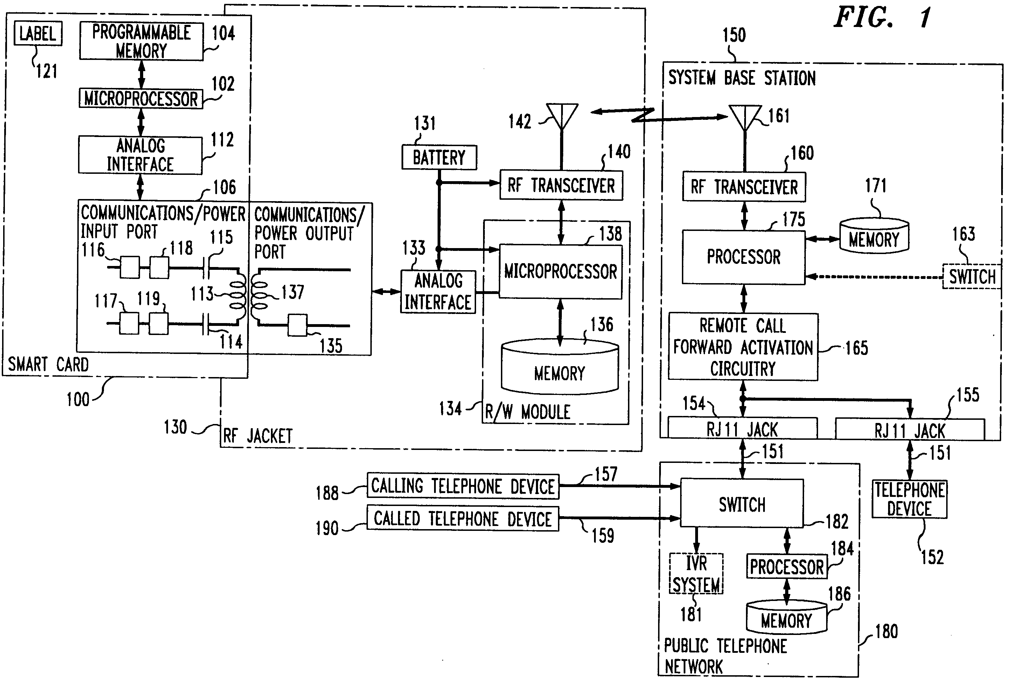

With reference to FIG. 1, a hardware block diagram of a preferred embodiment of the present invention is shown. The system of FIG. 1 provides automatic location updating and call forwarding for one or more telephone subscribers. Each telephone subscriber is furnished with a smart card 100. Smart card 100 is a thin, approximately credit-card sized device which includes an on-board microprocessor 102, programmeable memory 104, and a communications/power input port 106. Programmeable memory 104 is used to store a personal ID number corresponding to a given telephone subscriber. This ID number may be, for example, the home or office phone number of the subscriber, the subscriber's credit card number, drivers license number, or any other convenient identification number. The programmable memory 104 is implemented using an EEPROM circuit, which is capable of storing up to 3K bytes of data. The use of EEPROM type memory is advantageous in that a given smart card 100 is rendered reusable, and may be reprogrammed each time the card is transferred from one subscriber to another.

Microprocessor 102 is used to access programmeable memory 104. The microprocessor 102 operates in an 8-bit environment and incorporates an on-board clock. Various applications are controlled by the microprocessor 102, such as activating and deactivating the communications/power input port 106. Smart card 100 further includes an analogue interface 112 which interfaces the communications/power input port 106 with the microprocessor 102. The microprocessor 102 implements data transfers between communications/power input port 106 and programmeable memory 104 via analogue interface 112. The analogue interface 112 includes circuitry for performing microprocessor clock recovery operations, for processing data and power signals at the communications/power input port 106, and for processing input and output signals at the microprocessor 102. The signal processing functions at the communications/power input port 106 include the filtering of an AC input signal incident upon this port to develop power and data signals for the smart card 100. The smart card 100 includes one or more reactive elements which have a reactance to radio-frequency energy, such as, for example, an inductor 113 and capacitor plates 116, 117, 118, and 119 which respond to incident AC fields to generate output currents and voltages. The reactance of the inductor 113 may be tuned by selecting appropriate values for capacitors 114 and 115.

The analogue interface 112 filters the output voltages and currents generated by capacitor plates 116, 117, 118, and 119, inductor 113, and capacitors 114, 115 to produce an output voltage that serves a dual purpose. The output voltage represents data, and it also performs the function of serving as the smart card 100 power supply source. In this manner, the smart card 100 operates as a contactless device. Data communications to and/or from the smart card 100 are performed via electromagnetic fields, and do not require any metal-to-metal or direct contact between smart card 100 and external devices. For ease of identification, the smart card 100 may contain one or more labels 121. These labels could include, for example, the printed name of the subscriber, the subscriber's signature, and/or the corporate logo of the company issuing the smart card 100. The overall physical configuration of the smart card 100 is designed to very closely resemble a typical consumer credit card.

Wireless radio frequency encasing 130 is a thin, approximately credit-card-sized sleeve configured to removably and at least partially envelop smart card 100. The techniques used to fabricate the wireless radio frequency encasing 130 are well-known to those skilled in the art. For example, the wireless radio frequency encasing may be constructed using state-of-the-art surface mount components. Additionally, stripline and/or microstrip transmission lines may be employed to implement the radio frequency circuitry and/or the antenna for the radio frequency encasing 130. In this manner, a radio frequency transceiver 140 within the radio frequency encasing 130 may be designed to operate at any desired frequency or frequencies within the VLF (10 to 100 kHz), LF (100 to 500 kHz), MF (0.5 to 1.7 mHz), HF(1.7 to 30 mHz), VHF (30 to 300 mHz), UHF (300 mHz to 1 gHz), microwave (1 to 100 gHz), or infrared (100 gHz and above) frequency ranges.

Depending upon the frequency range, radio-frequency output power, and/or field strength level of the radio frequency encasing 130, a license may be required from the appropriate governmental regulatory authority, such as the PTT. However, governmental regulations often provide for low-power operation without the requirement for a license. One preferred embodiment of the invention operates in the frequency range of 800 to 1000 mHz, providing sufficient radio frequency coverage for typical office complex, hotel, residential, commercial, and industrial environments.

The wireless radio frequency encasing 130 includes a battery 131 and a contactless communications/power output port 132 which interfaces with the communications/power input port 106 on smart card 100 to perform data read/write operations. This interface operates via near-field electromagnetic coupling between the communications/power output port 132 and the communications/power input port 106. Each of these ports contains at least one reactive coupling element, such as a capacitive plate 135 and/or an inductor 137. If a capacitive plate 135-inductor 137 combination is employed, these reactive elements may be designed to resonate at a desired frequency or range of frequencies in order to optimize power transfer between the communications/power output port 132 and the communications/power input port 106. These ports exchange data signals and also function to transfer electrical power from the wireless radio frequency encasing 130 to the smart card 100.

Electrical power is transferred from the communications/power output port 132 to the communications/power input port 106 by converting the direct current from battery 131 into alternating current as, for example, by using an oscillator circuit. This alternating current is transferred from the radio frequency encasing 130 to the smart card 100 and, therefore, is not to be confused with the radio frequency output produced by the radio frequency transceiver 140 as described above. Note that the radio frequency output from the radio frequency encasing 130 provides communications between the radio frequency encasing and a base station 150.

The communications/power output port 132 interface with a read/write module 134 consisting of memory 136 and a microprocessor 138, via an analogue interface 133. The read/write module 134 controls the operation of the radio frequency transceiver 140 which is equipped to modulate data signals onto a transmitted radio frequency carrier, and demodulate data signals from a received RF radio frequency carrier. The transceiver module communicates with one or more remotely-situated base stations 150 via an antenna 142. The antenna may or may not be external to the radio frequency encasing 130 and could, for example, be incorporated within the radio frequency encasing 130 enclosure as a circuit board conductive trace, a length of microstrip or stripline, and/or a piece of wire. Alternatively, a conventional quarter-wave, five-eighths-wave, non resonant whip, or flexible rubber-and epoxy-sealed helicals antenna could be employed.

The technique of the present invention employs one or more base stations 150. The base station is connected to a standard telephone line 151. One or more telephone devices 152 may also be connected to this telephone line 151. However, telephone device 152 may optionally be built into the base station 150. The base station 150 is equipped with one or more standard telephone jacks 154, 155 to facilitate incorporating the base station into existing residential, industrial, and/or commercial telephone systems. For example, jack 154 is used to connect the base station 150 with an incoming telephone line hooked up to a standard (e.x., RJ11) wall jack. Jack 155 connects the base station with a telephone device 152 such as a conventional DTMF touch-tone telephone. The base station 150 may be configured as a stand-alone unit which, for example, would be placed upon a desktop. Alternatively, the base station 150 could be configured to fit within a conventional telephone or door frame.

The base station 150 includes a radio frequency transceiver 160 which communicates with the radio frequency transceiver 140 within the radio frequency encasing 130. In this manner, information is transferred from and/or to a system user's smart card 100 via a radio frequency link between the radio frequency encasing 130 and the base station 150. The base station radio frequency transceiver 160 is designed to complement the radio frequency transceiver 140 in the radio frequency encasing. Accordingly, the base station radio frequency transceiver 160 is equipped to receive the transmitting frequency or frequencies of one or more radio frequency encasings 130. Likewise, radio frequency transceiver 160 transmits on a frequency or frequencies which are receivable by one or more radio frequency transceivers 140. As with the radio frequency encasing 130, the base station may be designed to operate on any convenient frequency or frequencies in the range of VLF to infrared. Base station 150 is provided with an antenna 161 appropriate to the frequency range selected, which in the case of 800 mHz to 1000 mHz operation could be a quarter-wave whip or the helical rubber style antenna described above. The area for which the communications link between the base station 150 and the radio frequency encasing 130 is operative may be termed the operational range of the base station 150.

A memory 171, such as random-access memory (RAM), is incorporated into the base station 150. Memory 171 stores system user information, including user telephone numbers, a first program for activating and reading information from the radio frequency encasing 130/smart card 100 combination, and a second program for activating the remotely-activated call forwarding feature offered- by the public telephone network 180. Memory 171 may optionally include a service table associating each user telephone number with a type of service, such as voice, facsimile, and/or telefax, and a location table specifying the telephone number of the device nearest the base station 150 which offers the specified service. In this manner, incoming calls directed to a user's first fax machine may be forwarded to a telephone number corresponding to a second fax machine located closer to the recipient's current location, whereas incoming calls on the user's first voice line phone number may be forwarded to a second voice line number having a telephone situated in a more convenient location, relative to the current location of the call recipient.

In an alternate embodiment of the invention, the base station 150 includes a switch 163 having a plurality of positions each corresponding to a given service such as voice, facsimile, and/or telefax. The base station RJ11 jack 155 is connected to a telephone device providing at least one of the aforementioned services. The switch 163 is then set by the user to a position corresponding to the telephone device connected to the RJ11 jack 155.

The operations of memory 171 and radio frequency transceiver 150 are controlled by a processor 175 which, in the preferred embodiment of the invention is a microprocessor device. At the appropriate times, the processor 175 executes the remotely-activated call forwarding program stored in memory 171. In practice, this program is activated whenever the base station 150 senses the presence of a new smart card 100 within the base station's control area. At this time, the base station 150 executes the program which implements an activate and read transaction with the radio frequency encasing 130/smart card 100 combination.

The system base station 150 is connected to a telephone line 151 which interfaces with a public telephone network 180. Public telephone network 180 provides each of a plurality of telephone subscribers with telephone lines 151, 157, 159, each line adapted for connection to at least one telephone device such as calling telephone device 188, called telephone device 190, and telephone device 152. Each telephone line 151, 157, 159 corresponds to one or more unique telephone numbers. Telephone devices 152, 188, 190 may include, for example, standard DTMF touch-tone telephones, conventional rotary phones, fax machines, telefax devices, cordless phones, wireless phones, and/or cellular telephone networks. The public telephone network is equipped to connect the calling telephone device 188 to a selected subscriber telephone device such as called telephone device 190.

The public telephone network 180 is capable of implementing a function known as remote call forwarding This function is operative for incoming calls directed to a given telephone number corresponding to at least one of a specific telephone line 151, 157, 159. Upon activation of the call forwarding feature by the telephone subscriber, all incoming telephone calls directed to a given subscriber telephone line 159 will be switched by the public telephone network to another subscriber-selected telephone line, such as telephone line 151. The call forwarding feature may be selectively activated from any telephone device 152, 188, 190 connected to the public telephone network 180. The telephone subscriber dials a special telephone number which is recognized by the public telephone network 180 as the remote call forwarding activation number.

An interactive voice response system 181 may optionally be employed to prompt the subscriber as to whether it is desired to activate or deactivate the remote call forwarding feature. If the feature is to be deactivated, future incoming calls directed to the subscriber will be routed to the subscriber's home telephone device, such as called telephone device 190. If the feature is to be activated, the interactive voice response system 181 prompts the subscriber to enter a forwarding telephone number to which future incoming calls are to be directed. Once the subscriber enters a forwarding telephone number, all incoming calls directed to the subscriber's home telephone device (i.e., called telephone device 190) will be connected to the forwarding telephone number (i.e., telephone device 152) until the subscriber calls the special remote call forwarding activation number to change the call forwarding telephone number or to cancel the remote call forwarding feature.

According to the techniques of the present invention, the remote call forwarding activation feature offered by the public telephone network 180 is controlled automatically, such that incoming calls are automatically directed to a telephone device near the subscriber if the subscriber is within the operational area of the invention. Automatic control of the call forwarding activation feature means that a telephone subscriber is not required to place a telephone call to the public telephone network in order to control the call forwarding activation feature. Automatic control also signifies that the subscriber is not required to insert a smart card into a reader at a fixed location, nor is the subscriber required to enter a sequence of DTMF digits into a telephone device near his or her current location. Rather, the subscriber merely gains physical entry into the operational area of the invention with a smart card 100/radio frequency encasing combination in order to activate the automatic call forwarding feature. The operational area of the invention includes the area over which radio frequency communications between radio frequency encasing 130 and at least one system base station 150 are effective. The present invention activates, deactivates, and/or changes the forwarding number automatically, without requiring the subscriber to take any update action, such as manually dialing in the remote call forwarding activation number of the public telephone network, or inserting a smart card into a stationary reader device.

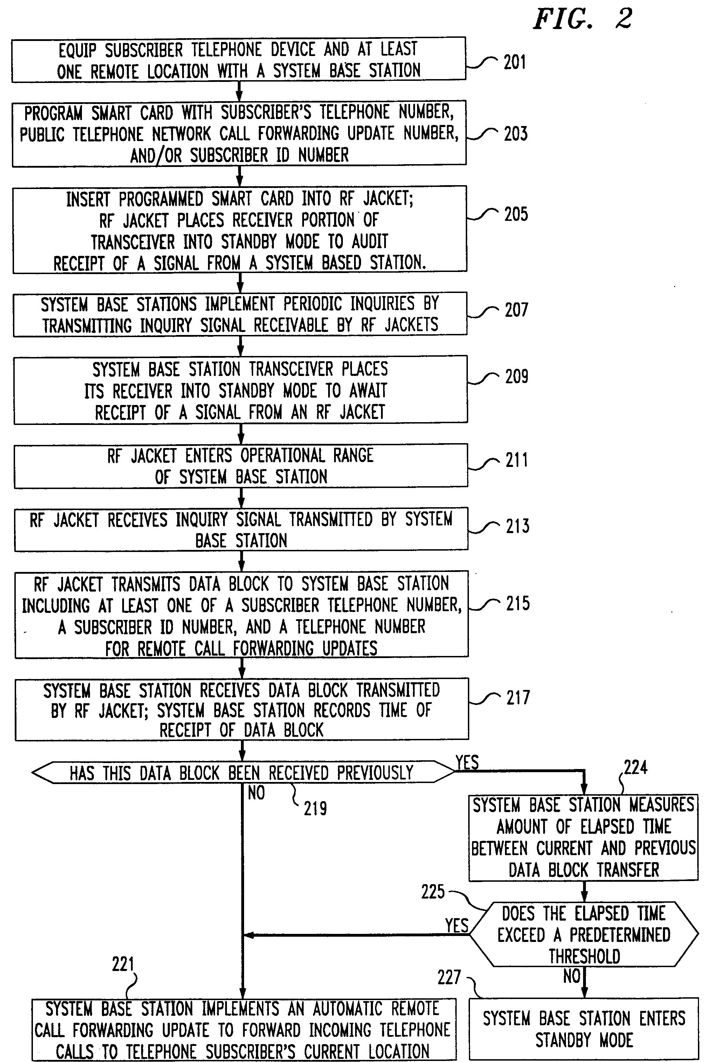

The methods utilized by the automatic call forwarding technique of the present invention are described with reference to FIG. 2. At block 201, a subscriber's telephone device (for example, FIG. 1, 190) is equipped with a system base station(FIG. 1, 150). This subscriber telephone device may be situated, for example, in the subscriber's home or office. Furthermore, at least one remote location is also equipped with a system base station. This remote location may be, for example, at a subsidiary office of the telephone subscriber's place of employment. The remote location could also be an office down the hall from the subscriber, an office on another floor, a conference room, a location at a nearby building, a location at a far away building, a hotel, a restaurant, or any other location to which it may be desired to forward incoming calls.

At block 203, at least one smart card (100, FIG. 1) is programmed with the subscriber's telephone number, which may be a home number, an office number, or any number which uniquely identifies a particular subscriber or group of subscribers. The smart card may also be programmed with the telephone number which implements remote call forwarding in the public telephone network (FIG. 1, 180). Note that the operations of block 203 need not be performed after those of block 201, and may be performed before or concurrently with the operations set forth in block 201.

The subscriber inserts the programmed smart card 100 (FIG. 1) into the radio frequency encasing 130 (FIG. 1) at block 205. At block 207, the base stations 150 (FIG. 1) each implement periodic inquiries wherein the base station transceiver 160 (FIG. 1) transmits an inquiry signal to any radio frequency encasings 130 (FIG. 1) which may be within the operational range of the base station. At block 209, the base station transceiver 160 (FIG. 1) places its receiver into a standby mode, and waits to receive a signal from an radio frequency encasing 130 (FIG. 1). Meanwhile, as soon as the smart card 100 was inserted into the radio frequency encasing 130 (block 205), the radio frequency encasing 130 (FIG. 1) places the receiver portion of its radio frequency transceiver 140 into a standby mode, awaiting the receipt of an inquiry signal from a base station 150 (FIG. 1).

Once the radio frequency encasing 130 is. brought within the operational range of a base station 150 (block 211), the radio frequency encasing radio frequency transceiver 140 receives the inquiry signal transmitted by the base station 150 (block 213). In response to the receipt of the inquiry signal, the radio frequency transceiver 140 transmits a data block to the base station 150 (block 215). This data block includes the subscriber's telephone number and the telephone number required to activate the remote call forwarding function implemented by the public telephone network. The radio frequency encasing 130 obtains these telephone numbers from data stored within the programmeable memory 104 of the smart card 100 (FIG. 1).

At block 217, the base station 150 receives the data block transmitted by the radio frequency encasing 130. The base station 150 records the time at which the data block is received from the radio frequency encasing 130. Next (block 219), the base station processor checks to see whether the data block received at block 217 has previously been received from this smart card 100 via an radio frequency encasing 130. If this data block has not been previously received, the base station 150 implements an automatic remote call forwarding update by placing a telephone call to the public telephone network remote call forwarding activation telephone number (block 221). This activation telephone number may correspond to an interactive voice response system 181 (FIG. 1) integrated into the public telephone network 180. The base station 150 sends the public telephone network 180 all information required to perform a remote call forwarding update operation. This information includes the subscriber telephone number, as well as the number of a telephone to which new incoming calls are to be forwarded. However, in an alternate embodiment of the invention, the number of the telephone to which new incoming calls are to be directed need not be sent to the public telephone network. Rather, if the public telephone network is equipped with the feature commonly known as "caller ID", the network could employ the caller identification (ICLID) signals originated by the remote call forward activation circuitry 165 of the system base station 150 to identify the location of the subscriber, and to forward new incoming calls to a telephone number convenient for the subscriber at the subscriber's current location.

If it is determined at block 219 that the data block transmitted by the radio frequency encasing 130 has been previously received by this system base station 150, then the base station measures the amount of elapsed time between the current data block transfer and the previous data block transfer. If this time duration exceeds a predetermined threshold (block 225), program control loops back to block 221, where a call forwarding update is performed. However, if the time duration does not exceed this threshold, then a call forwarding update is not performed, and the system base station enters a standby mode (block 227). In standby mode, the system base station periodically transmits inquiry signals and activates the receiver portion of the transceiver which is responsive to signals transmitted by any radio frequency encasings within operational range. It is desirable to incorporate a predetermined time threshold into the call forwarding update technique so as to minimize the expense of frequent and unnecessary telephone calls to the public telephone network to update (in this case, confirm) a subscriber's current location. In this manner, the base station can transmit inquiry signals at frequent intervals to identify radio frequency encasings which have recently entered into the operational range of the system without triggering an automatic location update at the public telephone network level for radio frequency encasings which have merely remained within the jurisdiction of a given system base station.

## Claims

1. A smart card arrangement for use in a system which forwards incoming telephone calls to the location of the subscriber, characterized by:
(A) memory means for storing a subscriber identification number uniquely specifying a telephone subscriber or a group of telephone subscribers;
(B) transceiver means for transmitting and receiving radio signals; and
(C) processor means coupled to the transceiver means and the memory means for selectively activating the transceiver means in response to a received radio signal to transmit a radio signal including the subscriber identification number, wherein the location of the subscriber is automatically identifiable.

2. The smart card arrangement as set forth in claim 1 wherein the transceiver means operates in the frequency range of 800 mHz to 1 gHz.

3. The smart card arrangement as set forth in claim 1 further characterized by a smart card and base station means including a base station transceiver for transmitting and receiving radio signals to and from the transceiver means of the smart card arrangement.

4. A portable subscriber tracking device characterized by:
(A) a smart card having
(i) memory means for storing data including a subscriber identification number uniquely specifying a telephone subscriber or a group of telephone subscribers,
(ii) smart card data communications port means for supplying data as an output and for receiving data as an input, and
(iii) processor means coupled to the data communications port means; the memory means responsive to data being received as an input for activating the supplying of data as an output from the data communications port means; and
(B) a radio frequency encasing having
(i) data communications port means for receiving data as input from, and supplying data as output, to the smart card data communications port; and
(ii) transceiver means coupled to the data communications port means for transmitting and receiving radio signals.

5. The portable subscriber tracking device as set forth in claim 4 wherein the transceiver means operates in the frequency range of 800 mHz to 1 gHz.

6. The portable subscriber tracking device as set forth in claim 4 wherein the radio frequency encasing data communications port means and the smart card data communications port means each further comprise radio-frequency reactive coupling element means including at least one of capacitance and inductance.

7. A system for automatically forwarding incoming telephone calls to the location of a subscriber characterized by:
(A) a telephone switching network including remote call forwarding activation means operative on an incoming telephone call directed to a first telephone number for selectively forwarding the incoming telephone call to a second telephone number comprising a call forwarded number,
the remote call forwarding activation means further including selective forwarding input means being assigned a third telephone number for accepting the call forwarded number such that, at a fourth telephone number, the call forwarded number may be changed to a fifth telephone number;
(B) a portable subscriber tracking device including:
(i) tracking device memory means for storing at least one of the first telephone number, the third telephone number, and a subscriber identification number uniquely specifying a telephone subscriber or a group of telephone subscribers,
(ii) tracking device transceiver means for transmitting and receiving radio signals, and
(iii) tracking device processor means coupled to the tracking device transceiver means and the tracking device memory means for selectively activating the tracking device transceiver means in response to a received radio signal to transmit a radio signal including at least one of the first telephone number, the third telephone number and the subscriber identification number; and
(C) a system base station coupled to the telephone switching network including
(i) base station memory means for storing the fifth telephone number,
(ii) base station transceiver means adapted for communications with the tracking device transceiver means for transmitting and receiving radio signals, and
(iii) base station processor means coupled to the base station transceiver means and the base station memory means for selectively activating the base station transceiver means at periodic time intervals to transmit an inquiry signal receivable by the tracking device transceiver means, wherein the location of the subscriber is automatically identifiable.

8. A system for forwarding incoming telephone calls to a subscriber location characterized by:
(A) a telephone switching network including remote call forward activation means for selectively forwarding an incoming telephone call directed to a first telephone number to a second telephone number comprising a call forwarded number, the remote call activation means further including input means for accepting the call forwarded number such that, at a third telephone number, the call forwarded number may be changed to a fourth telephone number; the telephone switching network further including a plurality of telephone switching network transceiver means for transmitting and receiving radio signals, wherein each telephone switching network transceiver means is coupled to the input means; and
(B) a portable subscriber tracking device including
(i) tracking device memory means for storing at least one of the first telephone number and a subscriber identification number uniquely specifying a telephone subscriber or a group of telephone subscribers,
(ii) tracking device transceiver means adapted for communicating with the telephone switching network transceiver means for transmitting and receiving radio signals, and
(iii) tracking device processor means coupled to the tracking device transceiver means and the tracking device memory means for selectively activating the transceiver means, in response to a received radio signal from the telephone switching network transceiver means, to transmit a radio signal including at least one of the first telephone number and the subscriber identification number, wherein the subscriber location is automatically identifiable.

9. A system for forwarding incoming telephone calls to a subscriber location characterized by:
A) a calling telephone device;
B) a called telephone device;
C) a third telephone device;
D) a telephone switching network including
i) switching means for connecting the calling telephone device to at least one of the called telephone device and the third telephone device,
ii) processor means for activating the switching means, the switching means being responsive to the processor means, and
iii) remotely activated call forwarding means responsive to a forwarding signal received from the third telephone device and operative on an incoming telephone call directed to the called telephone device for forwarding the telephone call to the third telephone device;
E) a portable telephone subscriber location unit including identity signal production means for producing a telephone subscriber identity signal uniquely specifying a given telephone subscriber or plurality of telephone subscribers; and
F) the called telephone device and the third telephone device each including signal detection and generation means responsive to the receipt of the telephone subscriber identity signal for producing the forwarding signal and sending the forwarding signal to the call forwarding means, wherein the subscriber location is automatically identifiable.

10. The system of claim 9 wherein the signal detection and generation means includes an radio frequency transceiver having (A) a receiver responsive to the subscriber identity signal, and (B) a transmitter for producing the forwarding signal.

11. The system of claim 10 wherein the radio frequency transceiver further includes a transmitter for producing an inquiry signal for activating the subscriber location unit, and the subscriber location unit further comprises an radio frequency transceiver having (A) a receiver responsive to the inquiry signal for activating the identity signal production means, and (B) a transmitter including the identity signal production means.

12. A system for forwarding incoming telephone calls to a subscriber location characterized by:
A) a calling telephone device;
B) a called telephone device;
C) a third telephone device;
D) a fourth telephone device;
E) a telephone switching network including
i) switching means for connecting the calling telephone device to at least one of the called telephone device and the third telephone device,
ii) processor means for activating the switching means, and
iii) remotely activated call forwarding means responsive to a forwarding signal received from the fourth telephone device and operative on an incoming telephone call directed to the called telephone device for forwarding the telephone call to the third telephone device;
F) a portable telephone subscriber location unit including identity signal production means for producing a telephone subscriber identity signal uniquely specifying a given telephone subscriber or plurality of telephone subscribers; and
G) the called telephone device and the fourth telephone device each including signal detection and generation means responsive to the receipt of the telephone subscriber identity signal for producing the forwarding signal and sending the forwarding signal to the call forwarding means, wherein the subscriber location is automatically identifiable.
